# EUROPÄISCHE PATENTSCHRIFT

(11) **EP 1 305 918 B1**
(45) Veröffentlichungstag und Bekanntmachung des Hinweises auf die Patenterteilung: **28.03.2007**
(21) Anmeldenummer: 01953892.5
(22) Anmeldetag: 09.07.2001
(51) Int. Cl.: H04L 12/64

(54) **VERFAHREN ZUM ÜBERTRAGEN VON SPRACHDATEN ÜBER VERSCHIEDENE ARTEN VON NETZEN SOWIE ZUGEHÖRIGE EINHEITEN**
METHOD FOR TRANSMITTING VOICE DATA OVER DIFFERENT TYPES OF NETWORKS, AND CORRESPONDING UNITS
PROCEDE DE TRANSMISSION DE DONNEES VOCALES SUR DIFFERENTS TYPES DE RESEAUX, ET UNITES CORRESPONDANTES

(30) Priorität: 01.08.2000 DE 10037518
(43) Veröffentlichungstag der Anmeldung: 02.05.2003
(73) Patentinhaber: SIEMENS AKTIENGESELLSCHAFT, 80333 München (DE)
(72) Erfinder: HOFFMANN, Klaus, 81735 München (DE)
(86) Internationale Anmeldenummer: PCT/DE2001/002554
(87) Internationale Veröffentlichungsnummer: WO 2002/011376

(56) Entgegenhaltungen:
- EP-A- 0 973 343
- US-A- 5 737 331
- US-A- 6 041 064

## Beschreibung

Die Erfindung betrifft ein Verfahren zum Übertragen von Sprachdaten über verschiedene Arten von Netzen, bei dem Nutzdaten über eine Übertragungsstrecke eines durchschaltevermittelten Datenübertragungsnetzes übertragen werden. Über die Übertragungsstrecke übertragene Nutzdaten werden auf Datenpakete verteilt und über ein Paketübertragungsnetz weitergeleitet.

Ein bekanntes Verfahren wird in einer Netzübergangseinheit ausgeführt, die ein Paketübertragungsnetz und ein durchschaltevermitteltes Netz verbindet, siehe Standard H.323 (02/98) "Packed Based Multimedia Communications Systems" der ITU-T (International Telecommunication Union - Standardisation Sector Telecommunication). Die Netzübergangseinheit wird in diesem Standard auch als Gateway bezeichnet.

Ein anderes Verfahren wird in Dokument US 5121385 ausgeführt.

Im Paketübertragungsnetz werden die Daten auf der Basis von Datenpaketen weitergeleitet. Jedoch sind auch Verfahren bekannt, um Datenpakete in durchschaltevermittelten Netzen weiterzuleiten. Die Datenpakete haben einen Paketkopf, in dem sich die Adresse eines Ziels und die Adresse des Absenders befinden. Außerdem gibt es einen Datenpaketrumpf, in welchem die Nutzdaten übertragen werden. Typische Beispiele für Paketübertragungsnetze sind Netze, die gemäß Internetprotokoll arbeiten oder ATM-Netze (Asyncronous Transfer Mode).

Bei der Übertragung von Sprachdaten in durchschaltevermittelten Netzen, d.h. in Netzen, in denen eine Übertragungsstrecke für die Dauer einer durchschaltevermittelten Verbindung dieser Verbindung fest zugeordnet ist, werden auch Nutzdaten in Sprechpausen übertragen. Diese Nutzdaten sind jedoch für das Verständnis des Gespräches redundant. Aus durchschaltevermittelten Netzen sind verschiedene Maßnahmen zur Unterdrückung der Weiterleitung von Nutzdaten in Sprechpausen bekannt, die sich jedoch nicht ohne weiteres auf Paketübertragungsnetze oder auf den Übergang zwischen einem durchschaltevermittelten Netz und einem Paketübertragungsnetz übertragen lassen, weil sie sich nur auf die bessere Ausnutzung von Übertragungskanälen beziehen.

Es ist Aufgabe der Erfindung, zur Übertragung von Sprachdaten über verschiedene Arten von Datenübertragungsnetzen ein einfaches Verfahren anzugeben, bei dem die Übertragung redundanter Daten eingeschränkt ist. Außerdem sollen zugehörige Einheiten und zugehörige Programme angegeben werden.

Die das Verfahren betreffende Aufgabe wird gemäß einem ersten Aspekt durch die im Patentanspruch 1 angegebenen Verfahrensschritte gelöst. Weiterbildungen sind in den Unteransprüchen angegeben.

Die Erfindung geht von der Überlegung aus, dass bei der Übertragung von Datenpaketen zwar nicht eine ganze Übertragungsstrecke fest zugewiesen wird, dass jedoch die Übertragungskapazität des Paketübertragungsnetzes eingeschränkt ist. Somit sollten in Sprechpausen keine Nutzdaten als Datenpakete übertragen werden. Deshalb werden beim erfindungsgemäßen Verfahren zusätzlich zu den eingangs genannten Verfahrensschritten die über die Übertragungsstrecke übertragenen Nutzdaten auf Datenpakete nur dann verteilt und weitergeleitet, wenn die Nutzdaten für die Sprachübertragung typisch sind. In Sprechpausen werden dagegen keine Nutzdaten über das Paketübertragungsnetz weitergeleitet.

Dies bedeutet, dass Nutzdaten, die über die Übertragungsstrecke übertragen worden sind, dann verworfen werden, wenn die Nutzdaten für Sprechpausen typisch sind. Wird dagegen bereits im durchschaltevermittelten Netz eine Maßnahme zur Unterdrückung der für Sprechpausen typischen Nutzdaten eingesetzt, so wird diese Maßnahme auch im Paketübertragungsnetz beibehalten. In diesem Fall werden Nutzdaten, die für Sprechpausen typisch sind, nicht über die Übertragungsstrecke und auch nicht über das Paketübertragungsnetz weitergeleitet.

Bei dem erfindungsgemäßen Verfahren wird die Verbindung unter Verwendung eines Signalisierungsprotokolls für die durchschaltevermittelte Übertragung von Nutzdaten aufgebaut. Mindestens eine in den Verbindungsaufbau einbezogene Signalsierungseinheit ermittelt die Art der Verbindung. Das Verfahren zur Vermeidung der Übertragung von Nutzdaten in Sprechpausen wird nur dann durchgeführt, wenn eine Sprachübertragungsverbindung aufgebaut worden ist. In vielen Signalisierungsprotokollen gibt es Kennzeichen für die Art der Verbindung. Durch die Weiterbildung wird diese Tatsache genutzt, um von der Art der Verbindung auf die Art der Nutzdaten zu schließen. Es ist nämlich schwierig, nur an Hand der Nutzdaten festzustellen, ob diese Sprachdaten, Faxdaten oder Computerprogrammdaten enthalten.

Die Erfindung lässt sich auch in zwei am Verbindungsaufbau beteiligten Signalisierungseinheiten unabhängig voneinander durchführen. Liegt eine Sprachverbindung vor, so wird das erfindungsgemäße Verfahren oder eine seiner Weiterbildungen ausgeführt. Durch ein solches implizites Vorgehen lässt sich eine zusätzliche Signalisierung zwischen den Signalisierungseinheiten bezüglich der Durchführung des Verfahrens vermeiden.

Bei einer Weiterbildung enthalten die Datenpakete mindestens eine Bitstelle, deren Wert anzeigt, dass weitere Datenpakete folgen. Beim Erfassen einer Sprechpause wird mindestens ein Datenpaket übertragen, das einen anderen Wert an der Stelle enthält. Durch diese Maßnahme lässt sich dem Empfänger auf einfache Art mitteilen, dass das Senden von Datenpaketen vorerst eingestellt ist. Der Empfänger wartet somit nicht auf weitere Datenpakete und ist nicht veranlasst, Fehlerbehandlungsmaßnahmen einzuleiten. Werden die Datenpakete im Paketübertragungsnetz gemäß einem Übertragungsprotokoll für Echtzeit weitergeleitet, so lässt sich eine hinreichende Sprachqualität gewährleisten.

Ein Beispiel für ein solches Protokoll ist das Protokoll RTP (Real Time Protocol), das in den Defacto-Standards RFC1889 (Request for Comment) und RFC1890 von der IETF (Internet Engineering Task Force) festgelegt worden ist. Protokolle zur Übertragung von Daten in Echtzeit setzen voraus, dass die Datenpakete innerhalb einer Zeit von beispielsweise kleiner als etwa 250 Millisekunden beim Empfänger eintreffen. Ist dies nicht der Fall, so wird die Verbindung als gestört betrachtet. Das Übertragungsprotokoll lässt sich jedoch durch die Weiterbildung weiterhin einsetzen, weil vor dem Abbruch an Hand der Bitstelle geprüft werden kann, ob eine Sprechpause vorliegt oder ob die Verbindung tatsächlich gestört ist. Zu einem späteren Zeitpunkt lässt sich die Bedeutung der Bitstelle für das Erfassen einer Sprechpause auch in einen Standard oder in einen Defacto-Standard übernehmen.

Die das Verfahren betreffende Aufgabe wird weiterhin durch die im Patentanspruch 3 angegebenen Verfahrensschritte gelöst. Bei diesem Verfahren werden die Nutzdaten in Datenpaketen in dem Paketübertragungsnetz übertragen. Über das Paketübertragungsnetz übertragene Nutzdaten werden entpackt und über eine Übertragungsstrecke eines durchschaltevermittelten Datenübertragungsnetzes weitergeleitet. In den Datenpaketen zeigt der Wert mindestens einer Bitstelle an, dass weitere Datenpakete folgen. Ein anderer Wert der Bitstelle zeigt an, dass eine Sprechpause erfasst worden ist, in der keine Nutzdaten in Datenpaketen übertragen werden. Damit ist das Verfahren gemäß Patentanspruch 3 das Partnerverfahren zu dem Verfahren gemäß Patentanspruch 1 bzw. 2. Die dort genannten technischen Wirkungen gelten auch hier. Alternativ lässt sich das Verfahren gemäß zweitem Aspekt auch unabhängig vom Verfahren gemäß erstem Aspekt durchführen. In diesem Fall werden die Datenpakete beispielsweise von einem Endgerät des Paketübertragungsnetzes erzeugt.

Bei einer Weiterbildung des Verfahrens gemäß zweitem Aspekt werden bei Vorliegen einer Sprechpause über die Übertragungsstrecke Nutzdaten übertragen, die für Sprechpausen typisch sind. Alternativ wird das Vorliegen einer Sprechpause dem durchschaltevermittelten Netz auf andere Art weiter signalisiert.

Bei einer nächsten Weiterbildung des Verfahrens gemäß zweitem Aspekt wird die Verbindung unter Verwendung eines Signalisierungsprotokolls für die durchschaltevermittelte Übertragung von Nutzdaten aufgebaut. Mindestens eine in den Verbindungsaufbau einbezogene Signalsierungseinheit ermittelt die Art der Verbindung. Das Verfahren zur Vermeidung der Übertragung von Nutzdaten in Sprechpausen wird nur dann durchgeführt, wenn eine Sprachübertragungsverbindung aufgebaut worden ist. Somit gelten die oben beim ersten Aspekt in diesem Zusammenhang genannten Wirkungen. Die Weiterbildung lässt sich auch in zwei am Verbindungsaufbau beteiligten Signalisierungseinheiten unabhängig voneinander durchführen. Liegt eine Sprachverbindung vor, so wird das erfindungsgemäße Verfahren oder eine seiner Weiterbildungen ausgeführt. Durch ein solches Vorgehen lässt sich eine zusätzliche Signalisierung zwischen den Signalisierungseinheiten bezüglich der Durchführung des Verfahrens vermeiden.

Bei einer beide Aspekte betreffenden Ausgestaltung ist das Signalisierungsprotokoll das ISUP-Protokoll (ISDN User Part) oder das Protokoll Q.931 zur Teilnehmersignalisierung im Datenkanal bzw. ein auf diesen Protokollen aufbauendes Protokoll. Der Kern des ISUP-Protokolls ist in den Standards Q.763 und Q.764 der ITU-T (International Telecommunication Union - Telecommunication Standardisation Sector) festgelegt worden. In der Signalisierungseinheit wird vorzugsweise ein Parameter gelesen, in dem die Art der Verbindung direkt angegeben ist.

Ein solcher Parameter ist der in den Standards angegebene Parameter TMR (Transmission Medium Requirement). Gemäß Standard Q.764, Abschnitt 2.1.1.1a) gibt es verschiedene Verbindungsarten, z.B.:
- Sprachverbindungen,
- 3,1 kHz Audioverbindungen,
- 64 kBit/s unbeschränkte Verbindung,
- 64 kBit/s unbeschränkte bevorzugte Verbindung usw.

Maßnahmen zur Vermeidung der Übertragung von Nutzdaten in Sprechpausen lassen sich bei Sprachverbindungen und 3,1 kHz Audioverbindungen durchführen.

Bei einer beide Aspekte betreffenden Weiterbildung ist die Bitstelle in den Datenpaketen ein sogenanntes Markerbit M gemäß Übertragungsprotokoll RTP. Das Markerbit ist im Defacto-Standard RFC1889/1890 zwar vorgesehen, hat jedoch keine Funktion. Damit lässt sich dieses Bit bei Maßnahmen zur Vermeidung der Übertragung von Nutzdaten in Sprechpausen einsetzen. Alle anderen Vorgaben des Standards RFC1889/1890 können unverändert beibehalten werden, so dass das fehlerfreie Zusammenarbeiten von Einheiten verschiedener Hersteller gewährleistet ist.

Bei einer nächsten Weiterbildung werden die Sprechpausen betreffenden Maßnahmen abhängig von einer Nachricht der Signalisierungseinheit an mindestens eine Netzübergangseinheit zwischen Übertragungsstrecke und Übertragungsnetz ausgeführt. Somit braucht in den Netzübergangseinheiten selbst die Art der Nutzdaten nicht geprüft zu werden. Zur Signalisierung wird ein Protokoll eingesetzt, das zur Ansteuerung von Netzübergangseinheiten geeignet ist, z.B. das Protokoll MGCP (Media Gateway Control Protocol), das von der IETF im Defacto-Standard RCF2705 festgelegt worden ist. Als Übertragungsmedium wird beispielsweise das Internet genutzt.

Bei einer anderen Weiterbildung wird eine Sprechpause dann erfasst, wenn mindestens zwanzig Millisekunden lang keine für die Sprachübertragung typischen Nutzdaten übertragen werden. Zur Erkennung einer Sprechpause lassen sich bekannte Sprechpausenerkenner einsetzen. Ein einfaches Verfahren besteht darin, die Nutzdaten mit Hilfe eines Codes in Sprachsignale zu wandeln, z.B. mit Hilfe des Codes gemäß Standard G.711 oder gemäß Standard G.723.1 der ITU-T (International Telecommunication Union - Telecommunication Standardisation Sector). Bleiben die Signale mehr als zwanzig Millisekunden unterhalb eines Schwellwertes, so wird davon ausgegangen, dass eine Sprechpause vorliegt. Die zugehörigen Nutzdaten werden also nicht weitergeleitet.

Bei einer nächsten Weiterbildung werden die Datenpakete gemäß Internetprotokoll im Internet und/oder in einem Intranet weitergeleitet. Die Übertragungsstrecke ist bei einer Weiterbildung ein Zeitkanal in einer PCM-Strecke (Pulse Code Modulation).

Die Erfindung betrifft außerdem eine Signalisierungseinheit, insbesondere eine Vermittlungsstelle, die für die Ausführung des erfindungsgemäßen Verfahrens verwendet wird. Die oben für die Verfahren genannten technischen Wirkungen gelten auch für die Signalsierungseinheit.

Bei einer Weiterbildung veranlasst die Signalsierungseinheit oder die Netzübergangseinheit Maßnahmen, durch die in Sprechpausen keine Datenpakete übertragen werden. Dabei wird bei einem Übergang zwischen einem durchschaltevermittelten Netz und einem Paketübertragungsnetz die Netzübergangseinheit an der Grenze der beiden Netze benachrichtigt. Gibt es mehrere Netzübergänge, so werden mehrere Netzübergangseinheiten benachrichtigt.

Bei einer anderen Weiterbildungen ist die Signalisierungseinheit so aufgebaut, dass bei ihrem Betrieb ein Verfahren nach einem der beiden Aspekte des erfindungsgemäßen Verfahrens oder deren Weiterbildungen ausgeführt wird. Gibt es zwei Netzübergangseinheiten, die bei der Übertragung von Nutzdaten einbezogen werden, so lassen sich diese von einer Vermittlungsstelle oder auch von getrennten Vermittlungsstellen aus einbeziehen.

Die Erfindung betrifft außerdem Netzübergangseinheiten, die zur Übertragung von Sprachdaten über verschiedene Arten von Netzen eingesetzt werden. In den Netzübergangseinheiten wird eines der erfindungsgemäßen Verfahren oder eine Weiterbildung eines erfindungsgemäßen Verfahrens ausgeführt. Damit gelten die oben genannten technischen Wirkungen auch für die Netzübergangseinheiten. Insbesondere werden bei Weiterbildungen die Netzübergangseinheiten von einer Signalisierungseinheit gesteuert, und/oder es wird die genannte Bitstelle in den Datenpaketen mit einem Wert belegt, der die Übertragung folgender Datenpakete ankündigt, bzw. mit einem Wert, der eine Sprechpause signalisiert. In der anderen Netzübergangseinheit wird der Wert dieser Bitstelle ausgewertet.

Weiterhin betrifft die Erfindung ein Programm, bei dessen Ausführung eines der erfindungsgemäßen Verfahren oder deren Weiterbildungen ausgeführt werden. Das Programm ist beispielsweise in einer Speichereinheit oder auf einer Kompaktdisc gespeichert. Auch lässt sich das Programm in einer Datennetznachricht über das Internet übertragen.

Im Folgenden werden Ausführungsbeispiele der Erfindung an Hand der beiliegenden Zeichnungen erläutert. Darin zeigen:
- Figur 1: ein mit dem Internet verbundenes Fernmeldenetz,
- Figur 2: in den verbundenen Netzen ausgetauschte Signalisierungsnachrichten, und
- Figur 3: die Übertragung von Datenpaketen mit Sprachdaten und das Verwerfen von Nutzdaten in einer Sprechpause.

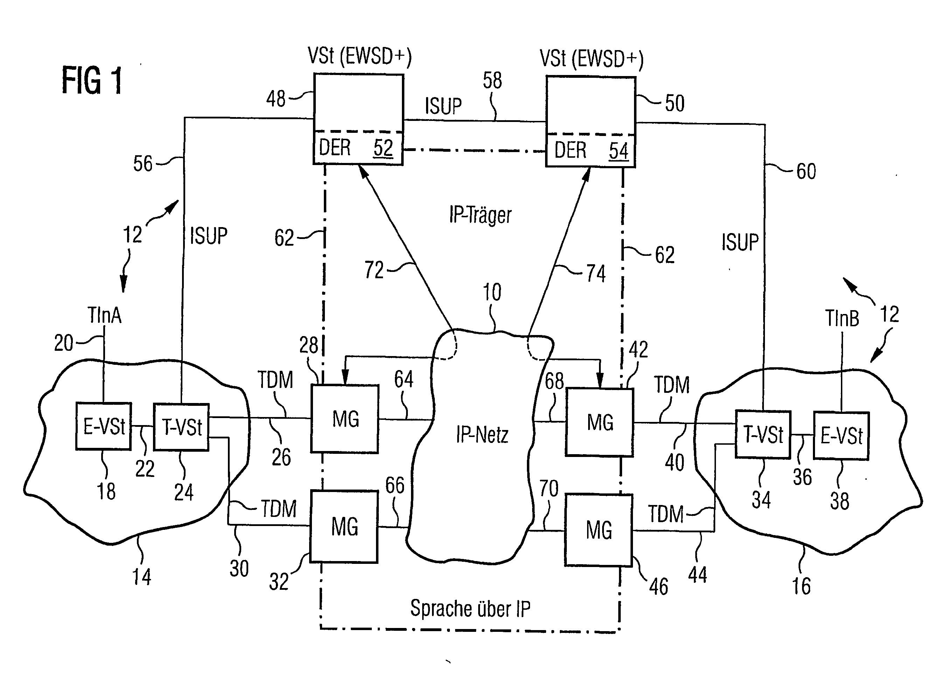

Figur 1 zeigt ein mit dem Internet 10 verbundenes Telefonnetz 12, z.B. das Telefonnetz der Telecom AG. In Figur 1 sind zwei Teile 14 und 16 des Telefonnetzes 12 dargestellt. Der Teil 14 befindet sich beispielsweise in Süddeutschland und der Teil 16 in Norddeutschland. Im Teil 14 ist eine Endvermittlungsstelle 18 dargestellt, an die über eine Übertragungsleitung 20 ein Teilnehmer TlnA angeschlossen ist, z.B. über einen ISDN-Anschluss (Integrated Services Digital Network). Die Endvermittlungsstelle 18 ist über eine Zwischenamtsleitung 22 mit einer Transitvermittlungsstelle 24 verbunden. Die Transitvermittlungsstelle 24 ist beispielsweise eine herkömmliche Vermittlungsstelle vom Typ EWSD (elektronisch gesteuertes digitales Wählsystem) der Firma Siemens AG. Eine Übertragungsstrecke 26 führt von der Transitvermittlungsstelle 24 zu einer Netzübergangseinheit 28. Die Übertragungsstrecke 26 ist beispielsweise ein Kanal eines PCM-30-Systems (Puls Code Modulation), wie es sonst zur Übertragung von Sprachdaten zwischen verschiedenen Vermittlungsstellen eingesetzt wird. Die Verbindungen zwischen verschiedenen Vermittlungsstellen werden auch als Trunks bezeichnet.

Eine Übertragungsstrecke 30 führt von der Transitvermittlungsstelle 24 zu einer weiteren Netzübergangseinheit 32. Die Funktion der Netzübergangseinheiten 28 und 32 wird weiter unten erläutert.

Der Teil 16 des Telefonnetzes 12 enthält eine Transitvermittlungsstelle 34, z.B. vom Typ EWSD. Die Transitvermittlungsstelle 34 ist über eine Zwischenamtsleitung 36 mit einer Endvermittlungsstelle 38 verbunden, an die ein Teilnehmer TlnB angeschlossen ist. Eine Übertragungsstrecke 40 der Transitvermittlungsstelle 34 führt zu einer Netzübergangseinheit 42. Eine weitere Übertragungsstrecke 44 führt von der Transitvermittlungsstelle 34 zu einer Netzübergangseinheit 46. Die Übertragungsstrecken 40 und 44 sind beispielsweise PCM-Kanäle, wie sie üblicherweise zur Übermittlung von Sprachdaten zwischen Vermittlungsstellen eingesetzt werden. Die Funktion der Netzübergangseinheiten 42 und 46 wird weiter unten erläutert.

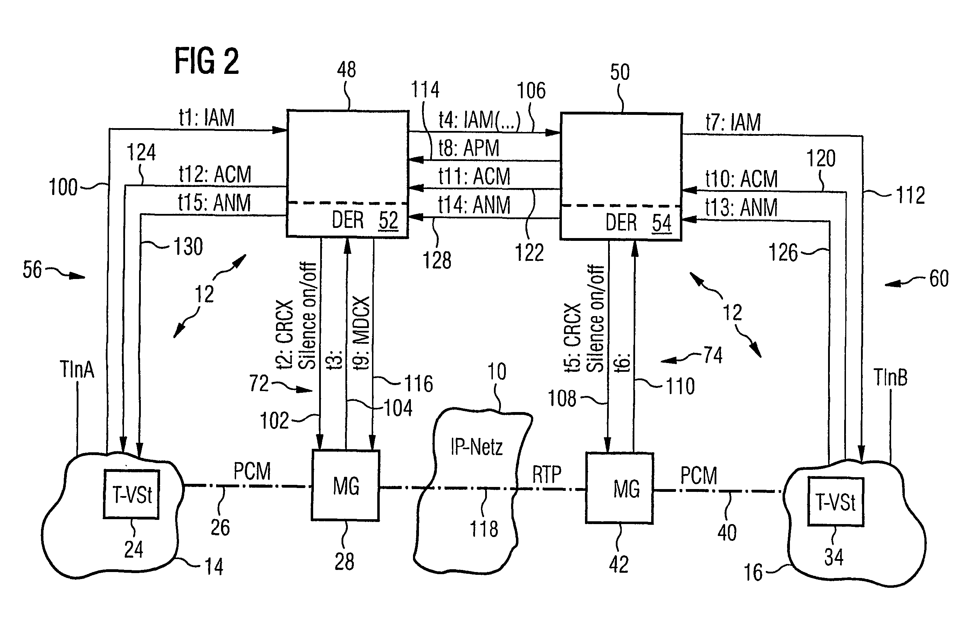

Das Telefonnetz 12 enthält außerdem zwei Vermittlungsstellen 48 und 50, die Weiterentwicklungen der Vermittlungsstellen vom Typ EWSD sind. Zusätzlich zu den Funktionen einer Vermittlungsstelle vom Typ EWSD übernehmen die Vermittlungsstellen 48 und 50 auch die Funktionen von Diensterbringungsrechnern 52 und 54. Diese zusätzlichen Funktionen werden insbesondere unten an Hand der Figur 2 erläutert. Zwischen der Vermittlungsstelle 58 und der Transitvermittlungsstelle 24 lässt sich eine Signalisierungsverbindung 56 aufbauen, auf der Signalisierungsnachrichten gemäß Protokoll ISUP (ISDN-User Part) übertragen werden. Beispiele für Nachrichten dieses Protokolls werden unten an Hand der Figur 2 erläutert.

Zwischen den Vermittlungsstellen 48 und 50 lässt sich eine Signalisierungsverbindung 58 aufbauen. Die Signalisierungsnachrichten über dieser Signalisierungsverbindung werden ebenfalls gemäß ISUP-Protokoll übertragen. Informationselemente werden in einem Container gemäß Standard Q.765 (1998) übertragen.

Zwischen der Vermittlungsstelle 50 und der Transitvermittlungsstelle 34 lässt sich eine Signalisierungsverbindung 60 aufbauen, auf der Signalisierungsnachrichten gemäß Protokoll ISUP übertragen werden.

Für die Übertragung der Sprachdaten zwischen dem Teilnehmer T1nA und dem Teilnehmer T1nB wird sowohl das Telefonnetz 12 als auch das Internet 10 eingesetzt. Innerhalb des Telefonnetzes 12 werden die Sprachdaten in Sprachkanälen durchschaltevermittelt übertragen. Innerhalb des Internets 10 werden die Sprachdaten dagegen in Datenpaketen übertragen. Die Grenze zwischen dem Telefonnetz 12 und dem Internet 10 ist durch eine gestrichelte Linie 62 angedeutet.

In den Netzübergangseinheiten 28, 32, 42 und 46 werden jeweils in Sprachkanälen empfangene Sprachdaten auf Datenpakete aufgeteilt und ins Internet 10 weitergeleitet. Aus dem Internet 10 kommende Datenpakete mit Sprachdaten werden in den Netzübergangseinheiten 28, 32, 42 und 46 entpackt und in Sprachkanälen in das Telefonnetz 12 weitergeleitet. Die Sprachdaten sind auf den Übertragungsstrecken 26, 30, 40 und 44 gemäß Standard G.711 kodiert.

Die Netzübergangseinheiten 28, 32, 42 und 46 sind in dieser Reihenfolge über Übertragungsstrecken 64 bis 70 an das Internet 10 angeschlossen, so dass Datenpakete über das Internet 10 zwischen den Netzübergangseinheiten 28, 32, 42 bzw. 46 ausgetauscht werden können. Auch die Diensterbringungsrechner 52 und 54 sind mit dem Internet 10 verbunden. Somit lassen sich auch Datenpakete zwischen den Diensterbringungsrechnern 52 bzw. 54 und den Netzübergangseinheiten 28, 32, 42 und 46 austauschen, siehe Signalisierungsweg 72 bzw. 74 zwischen dem Diensterbringungsrechner 52 und der Netzübergangseinheit 28 bzw. zwischen dem Diensterbringungsrechner 54 und der Netzübergangseinheit 42. Die Netzübergangseinheiten 28, 32, 42 und 46 und die Diensterbringungsrechner 52 und 54 haben jeweils mindestens eine Internet-Adresse, unter der sie im Internet 10 erreichbar sind.

Figur 2 zeigt Signalisierungsnachrichten zum Aufbau einer Verbindung zwischen dem Teilnehmer TlnA und dem Teilnehmer TlnB. An Hand der Figur 1 erläuterte Funktionseinheiten haben in Figur 2 die gleichen Bezugszeichen. Beim Aufbau einer Gesprächsverbindung zwischen dem Teilnehmer TlnA und dem Teilnehmer TlnB erzeugt die Transitvermittlungsstelle 24 zu einem Zeitpunkt t1 protokollgemäß eine Verbindungsaufbaunachricht 100, auch IAM-Nachricht (Initial Address Message) genannt.

Diese Nachricht enthält unter anderem die vollständige Rufnummer des Teilnehmers TlnB im Telefonnetz 12 und die Nummer eines für die Übertragung zu nutzenden Zeitschlitzes auf der Übertragungsstrecke 26. Die Verbindungsaufbaunachricht 100 wird über die Signalisierungsverbindung 56 übertragen. Nach dem Empfang der Verbindungsaufbaunachricht 100 wird in der Vermittlungsstelle 48 ein Programm ausgeführt, bei dessen Ausführung festgestellt wird, dass zur Übertragung der Sprachdaten das Internet 10 nutzbar ist. Es wird ermittelt, dass als Schnittstelle zwischen Telefonnetz 12 und Internet 10 auf der Seite des Teilnehmers T1nA die Netzübergangseinheit 28 genutzt werden muss. Der Diensterbringungsrechner 52 wird von einer Steuereinheit der Vermittlungsstelle 48 veranlasst, die dazu erforderlichen Schritte auszuführen.

Zu einem nach dem Zeitpunkt t1 liegenden Zeitpunkt t2 sendet der Diensterbringungsrechner 52 an die Netzübergangseinheit 28 über den Signalisierungsweg 72 eine Verbindungsaufbaunachricht 102 gemäß Defacto-Standard RFC2705. Die Verbindungsaufbaunachricht 102 wird auch als CRCX-Nachricht (Create Connection) bezeichnet. In der Verbindungsaufbaunachricht 102 ist der Zeitschlitz angegeben, der für die Nutzdatenübertragung genutzt werden soll. Außerdem enthält die CRCX-Nachricht eine Angabe darüber, ob eine Sprachverbindung betroffen ist und ob somit Maßnahmen zur Vermeidung der Übertragung von Datenpaketen in Sprechpausen zu treffen sind. Zur Übertragung dieser Angabe wird ein Bit genutzt, das im Standard RFC2705 als "Silence On/Off"-Bit bezeichnet wird. Gemäß Standard zeigt dieses Bit an, ob eine Gesprächspausenunterdrückung durchgeführt werden soll oder nicht.

Die Netzübergangseinheit 28 bearbeitet die Verbindungsaufbaunachricht 102 und erzeugt als Antwort zu einem Zeitpunkt t3 eine Antwortnachricht 104. Die Antwortnachricht 104 bestätigt zum einen den Empfang der Verbindungsaufbaunachricht 102 und enthält u.a. eine Internetadresse und eine Portnummer, die für den Empfang von Nutzdaten für eine zwischen der Netzübergangseinheit 28 und der Netzübergangseinheit 42 aufzubauende RTP-Verbindung nutzbar ist und die nun dem Zeitschlitz zugeordnet ist.

Der Diensterbringungsrechner 52 empfängt die Antwortnachricht 104 und leitet die empfangene Internet-Adresse sowie die Portnummer an die Steuereinheit der Vermittlungsstelle 48 weiter. Die Steuereinheit der Vermittlungsstelle 48 bearbeitet die Verbindungsaufbaunachricht 100 gemäß ISUP-Protokoll und erzeugt zu einem Zeitpunkt t4 eine Verbindungsaufbaunachricht 106. Die Verbindungsaufbaunachricht 106 wird gemäß ISUP-Protokoll auch als IAM-Nachricht bezeichnet. In der Verbindungsaufbaunachricht 106 sind Informationselemente enthalten, in denen die Internetadresse und die Portnummer weitergeleitet werden. Diese Informationselemente sind nicht im ISUP-Standard festgelegt, werden jedoch unter Einhaltung des Standards ISUP über die Signalisierungsverbindung 58 übertragen. In diesem Zusammenhang wird auch von Tunneln gesprochen.

Die Vermittlungsstelle 50 empfängt die Verbindungsaufbaunachricht 106 und bearbeitet auch die darin enthaltenen Informationselemente. Aufgrund des Inhalts dieser Informationselemente oder an Hand des Codes (CIC) zur Bezeichnung der Rufinstanz wird erkannt, dass keine übliche Telefonverbindung, sondern eine Telefonverbindung unter Verwendung des Internets 10 aufgebaut werden soll. Als zu nutzende Netzübergangseinheit auf der Seite des Teilnehmers TlnB wird durch die Vermittlungsstelle 50 die Netzübergangseinheit 42 ermittelt. Außerdem bestimmt die Vermittlungsstelle 50 einen Zeitschlitz, der bei ausschließlich durchschaltevermittelter Übertragung der Nutzdaten zwischen den Vermittlungsstellen 50 und 34 zu nutzen wäre. Dieser Zeitschlitz bezeichnet einen Übertragungskanal der Übertragungsstrecke 40. Der Diensterbringungsrechner 54 wird durch die Steuereinheit der Vermittlungsstelle 50 veranlasst, eine Internetverbindung über den Signalisierungsweg 74 aufzubauen. Zu einem Zeitpunkt t5 sendet der Diensterbringungsrechner 54 eine Verbindungsaufbaunachricht 108 an die Netzübergangseinheit 42. Die Verbindungsaufbaunachricht 108 entspricht dem bereits erwähnten Defacto-Standard RFC 2705 und wird auch als CRCX-Nachricht (Create Connection) bezeichnet. In der Nachricht 108 sind die von der Netzübergangseinheit 28 über die Vermittlungsstelle 48 gesendete Internetadresse und die Portnummer enthalten, die für die aufzubauende RTP-Verbindung zu nutzen sind. Au-ßerdem ist in der Verbindungsaufbaunachricht 108 der von der Vermittlungsstelle 50 ermittelte Zeitschlitz angegeben.

Die Verbindungsaufbaunachricht 108 enthält die Bitstelle "Silence On/Off". Durch einen vorgegebenen Wert in der Bitstelle wird signalisiert, dass die Netzübergangseinheit 42 Maßnahmen zur Vermeidung der Übertragung von Datenpaketen im Internet 10 bei Sprechpausen treffen soll.

Bei der Bearbeitung der Verbindungsaufbaunachricht 108 in der Netzübergangseinheit 42 wird zu dem angegebenen Zeitschlitz eine Internetadresse und eine noch nicht belegte Portnummer der Netzübergangseinheit 42 ermittelt, die für den Empfang der Nutzdatenpakete von der Netzübergangseinheit 28 nutzbar sind. Die Netzübergangseinheit 42 sendet anschließend zu einem Zeitpunkt t6 eine Antwortnachricht 110, um den Empfang der Verbindungsaufbaunachricht 108 zu bestätigen. Die Antwortnachricht 110 enthält außerdem die ermittelte Internetadresse der Netzübergangseinheit 42 sowie die ermittelte Portnummer.

Der übrige Teil der Verbindungsaufbaunachricht 106 wird in der Vermittlungsstelle 50 gemäß Protokoll ISUP bearbeitet. Dabei wird eine Verbindungsaufbaunachricht 112 erzeugt, die über die Signalisierungsverbindung 60 an die Transitvermittlungsstelle 34 übertragen wird. Die Verbindungsaufbaunachricht 112 wird auch als IAM-Nachricht (Initial Address Message) bezeichnet. Die Verbindungsaufbaunachricht 112 enthält unter anderem die Rufnummer des Teilnehmers T1nB und den von der Vermittlungsstelle 50 vorgegebenen Zeitschlitz. In der Transitvermittlungsstelle 34 wird die Verbindungsaufbaunachricht 112 protokollgemäß bearbeitet und an die Endvermittlungsstelle 38 weitergeleitet. Die Endvermittlungsstelle 38 ruft das Endgerät des Teilnehmers TlnB..

In der Vermittlungsstelle 50 wird beim Bearbeiten der Verbindungsaufbaunachricht 106 nach dem Empfang der Antwortnachricht 110 eine Antwortnachricht 114 erzeugt, die gemäß Protokoll ISUP auch als APM-Nachricht (Application Transport Message) bezeichnet wird. Die Antwortnachricht 115 enthält ein Informationselement mit der Internetadresse der Netzübergangseinheit 42 und ein Informationselement mit der von der Netzübergangseinheit 42 übermittelten Portnummer. Die Antwortnachricht 114 wird zu einem Zeitpunkt t8 an die Vermittlungsstelle 48 übertragen.

Die Steuereinheit der Vermittlungsstelle 48 extrahiert aus der Antwortnachricht 114 die Internetadresse und die Portnummer und veranlasst, dass der Diensterbringungsrechner 52 diese Verbindungsparameter an die Netzübergangseinheit 28 weitergibt. Dazu sendet der Diensterbringungsrechner 52 zu einem Zeitpunkt t9 eine Änderungsnachricht 116 gemäß Defacto-Standard RFC 2705. Die Änderungsnachricht 116 wird auch als MDCX-Nachricht (Modify Connection) bezeichnet. Die Änderungsnachricht 116 enthält die Internetadresse der Netzübergangseinheit 42 und die für die aufzubauende RTP-Verbindung zu nutzende Portnummer der Netzübergangseinheit 42.

In der Netzübergangseinheit 28 wird die Änderungsnachricht 116 verarbeitet und es ist ein direkter Übertragungsweg 118 zum Übertragen von Nutzdaten gemäß Protokoll RTP zwischen den Netzübergangseinheiten 28 und 42 nutzbar. Eine von der Netzübergangseinheit 28 erzeugte Antwortnachricht auf die Änderungsnachricht 116 ist in Figur 2 nicht dargestellt.

Zu einem folgenden Zeitpunkt t10 erzeugt die Transitvermittlungsstelle 34 protokollgemäß eine Nachricht 120, die auch als ACM-Nachricht (Address Complete Message) bezeichnet wird und signalisiert, dass alle Wahlziffern übertragen worden sind, um Teilnehmer TlnA und Teilnehmer TlnB zu verbinden. Die Nachricht 120 wird von der Steuereinheit der Vermittlungsstelle 50 protokollgemäß bearbeitet. Zu einem Zeitpunkt t11 sendet die Vermittlungsstelle 50 gemäß Protokoll ISUP eine ACM-Nachricht 122 an die Vermittlungsstelle 48. Die Vermittlungsstelle 48 verarbeitet die ACM-Nachricht 122 und sendet ihrerseits eine ACM-Nachricht 124 an die Transitvermittlungsstelle 24.

Nimmt der Teilnehmer TlnB das Gespräch an, so wird dies gemäß Protokoll ISUP an die Transitvermittlungsstelle 34 signalisiert. Die Transitvermittlungsstelle 34 erzeugt zu einem Zeitpunkt t13 eine Antwortnachricht 126, die über die Signalisierungsverbindung 60 zur Vermittlungsstelle 50 übertragen wird. Die Antwortnachricht 126 wird auch als ANM-Nachricht (Answer Message) bezeichnet. Aufgrund dieser Nachricht beginnt z.B. die Gebührenpflicht.

In der Vermittlungsstelle 50 wird die Antwortnachricht 126 protokollgemäß bearbeitet. Dabei wird an die Vermittlungsstelle 48 eine Antwortnachricht 128 gesendet. Die Vermittlungsstelle 48 erzeugt aufgrund der Antwortnachricht 128 zu einem Zeitpunkt t15 eine Antwortnachricht 130 an die Transitvermittlungsstelle 24.

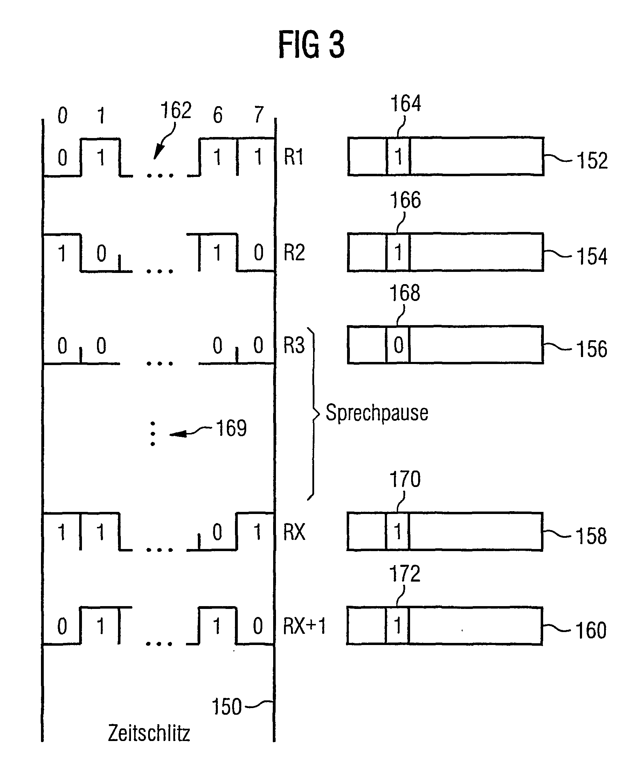

Die vom Teilnehmer TlnA erzeugten Sprachdaten werden im Teil 14 des Telefonnetzes 12 und über die Übertragungsstrecke 26 in Zeitschlitzen übertragen. Zwischen den Netzübergangseinheiten 28 und 42 werden die Sprachdaten in Datenpaketen gemäß Protokoll RTP übertragen. Auf der Übertragungsstrecke 40 und im Teil 16 des Telefonnetzes 12 werden die Sprachdaten wieder in Zeitschlitzen übertragen. Die Vorgänge in den Netzübergangseinheiten 28 und 42 werden unten an Hand der Figur 3 näher erläutert.

Das an Hand der Figur 2 erläuterte Verfahren wird beispielsweise eingesetzt, wenn andere Übertragungsstrecken des Telefonnetzes 12 ausgelastet sind und/oder wenn die Benutzung des Internets 10 Kostenvorteile für den Betreiber der Vermittlungsstellen 48 und 50 und damit letztlich auch für den Teilnehmer TlnA bringt.

Figur 3 zeigt die in der Netzübergangseinheit 28 bzw. in der Netzübergangseinheit 40 ausgeführten Schritte bei der Umsetzung von Nutzdaten aus einem Übertragungskanal 150 der Übertragungsstrecke 26 bzw. 40 in Datenpakete 152 bis 160. Zeitrahmen R1 bis RX+1 werden nacheinander über die Übertragungsstrecke 26 bzw. 40 übertragen. Bitstellen 0 bis 7 bezeichnen Bits der im Übertragungskanal 150 übertragenen Datenwörter.

Im Zeitrahmen R1 wird im Übertragungskanal 150 ein Datenwort übertragen, das an der Bitstelle 0 den Wert Null enthält. An der Bitstelle 1 wird der Wert Eins übertragen. Die Bitstellen 6 und 7 haben jeweils den Wert Eins. Punkte 162 deuten zwischen den Bitstellen 1 und 6 liegende Bitstellen an. Die Netzübergangseinheit 28 wertet diese Nutzdaten aus und stellt fest, dass es sich um Sprachdaten handelt. Deshalb wird das im Zeitrahmen R1 übertragene Datenwort des Übertragungskanals 150 im Paketrumpf des Datenpaketes 152 übertragen. Im Paketkopf des Datenpaketes 152 wird ein Markerbit 164 mit dem Wert Eins belegt, um anzuzeigen, dass weitere Datenpakete folgen.

In einem folgenden Zeitrahmen R2 wird ebenfalls ein Datenwort übertragen, das Sprachdaten enthält. Deshalb wird dieses Datenwort im Paketrumpf des folgenden Datenpaketes 154 übertragen. Ein Markerbit 166 des Datenpaketes 154 hat den Wert Eins, um anzuzeigen, dass weitere Datenpakete folgen.

In einem Zeitrahmen R3 ist durch ein Datenwort mit Bitwerten Null angedeutet, dass nun keine Sprachdaten, sondern Daten übertragen werden, die in einer Sprechpause entstehen. Die Netzübergangseinheit 28 erfasst diese Sprechpause und überträgt das Datenpaket 154, in dem das Markerbit 168 den Wert Null hat. Durch den Wert Null wird angezeigt, dass vorerst keine Datenpakete mehr übertragen werden. Für eine längere Zeit, z.B. 300 ms, werden nur Zeitrahmen R4 bis RX-1 empfangen, deren Nutzdaten in Sprechpausen entstanden sind. Diese Zeitrahmen sind durch Punkte 169 angedeutet. Die Netzübergangseinheit 28 wertet diese Nutzdaten aus, ordnet sie der Sprechpause zu und verwirft sie. Demzufolge werden die Datenworte der Zeitrahmen R4 bis RX-1 nicht in Datenpaketen über das Internet 10 weitergeleitet.

Erst in einem Zeitrahmen RX wird wieder ein Datenwort übertragen, das Sprachdaten enthält. Die Netzübergangseinheit 28 stellt bei der Prüfung der Nutzdaten fest, dass Sprachdaten übertragen werden. Deshalb wird das im Übertragungskanal 150 des Zeitrahmens RX übertragene Datenwort im Paketrumpf des Datenpaketes 158 über das Internet 10 übertragen. Ein Markerbit 170 des Datenpaketes 158 hat wieder den Wert Eins.

Im folgenden Zeitrahmen RX+1 werden weitere Sprachdaten im Übertragungskanal 150 übertragen. Deshalb werden diese Sprachdaten dem Übertragungskanal 150 entnommen und in dem Datenpaket 160 verpackt. Ein Markerbit 172 des Datenpaketes 160 hat den Wert Eins.

In der Netzübergangseinheit 42 werden die Datenpakete 152 bis 160 empfangen. An Hand der Werte der Markerbits 164 bis 168 bzw. 170 und 172 wird festgestellt, dass gemäß Protokoll RTP weitere Datenpakete folgen müssen. Nach dem Eintreffen des Datenpaketes 156 wird an Hand des Wertes Null im Markerbit 168 die Sprechpause erkannt. Während dieser Sprechpause empfängt die Netzübergangseinheit 42 keine Datenpakete der in Figur 3 erläuterten Verbindung. Jedoch werden in einem Übertragungskanal Nutzdaten zur Vermittlungsstelle 34 übertragen, die typisch für Sprechpausen sind.

Die an Hand der Figur 3 erläuterten Verfahrensschritte werden nur dann ausgeführt, wenn von den Vermittlungsstellen 48 bzw. 50 die Übertragung von Sprachdaten mit Hilfe der Bitstelle "Silence On/Off" in CRCX-Nachrichten signalisiert worden sind. Andernfalls werden alle eintreffenden Nutzdaten in Datenpakete gepackt und über das Internet 10 weitergeleitet.

Bei einem anderen Ausführungsbeispiel werden beide Netzübergangseinheiten 28 und 42 von einer Vermittlungsstelle aus gesteuert, beispielsweise von der Vermittlungsstelle 48 oder der Vermittlungsstelle 50.

Bei einem weiteren Ausführungsbeispiel sind die Netzübergangseinheiten 28 und 42 direkt in einer oder zwei Vermittlungsstellen enthalten. In diesem Fall kann ein vermittlungsstelleninternes Protokoll zur Steuerung der Netzübergangseinheiten 28 und 42 eingesetzt werden.

## Patentansprüche

1. Verfahren zum Übertragen von Sprachdaten über verschiedene Arten von Netzen (10, 12),
bei dem eine Verbindung unter Verwendung eines Signalisierungsprotokolls für die durchschaltevermittelte Übertragung von Nutzdaten aufgebaut wird,
Nutzdaten über eine Übertragungsstrecke (26, 40) eines durchschaltevermittelten Netzes (12) übertragen werden,
über die Übertragungsstrecke (26, 42) übertragene Nutzdaten auf Datenpakete (152 bis 160) verteilt und über ein Paketübertragungsnetz (10) weitergeleitet werden, wenn die Nutzdaten für die Sprachübertragung typisch sind,
keine in Datenpakete verteilte Nutzdaten über das Paketübertragungsnetz (10) weitergeleitet werden, wenn die Nutzdaten für Sprechpausen typisch sind,
**dadurch gekennzeichnet,**
**dass** mindestens eine in den Verbindungsaufbau einbezogene Signalisierungseinheit (48, 50) die in den Signalisierungsinformationen enthaltenen Verbindungsarteninformationen analysiert und die Art der Verbindung ermittelt wird,
und **dass** eine Prüfung auf Sprechpausen nur dann durchgeführt wird, wenn eine Sprachübertragungsverbindung aufgebaut worden ist.

2. Verfahren nach Anspruch 1, **dadurch gekennzeichnet, dass** in den Datenpaketen (152 bis 160) der Wert mindestens einer Bitstelle anzeigt, dass weitere Datenpakete (152 bis 160) folgen,
und dass beim Erfassen einer Sprechpause mindestens ein Datenpaket (156) übertragen wird, dass einen anderen Wert an der Bitstelle enthält.

3. Verfahren nach Anspruch 1,
**dadurch gekennzeichnet,**
**dass** in den Datenpaketen (152 bis 160) der Wert mindestens einer Bitstelle (169 bis 172) angezeigt, dass weitere Datenpakete (152 bis 160) folgen,
und **dass** ein anderer Wert der Bitstelle (170) anzeigt, dass eine Sprechpause vorliegt, in der keine Nutzdaten übertragen werden.

4. Verfahren nach Anspruch 3, **dadurch gekennzeichnet, dass** bei Vorliegen einer Sprechpause über die Übertragungsstrecke (26, 42) Nutzdaten übertragen werden, wie sie für Sprechpausen typisch sind,
oder dass das Vorliegen einer Sprechpause dem durchschaltevermittelten Datenübertragungsnetz (12) auf andere Art signalisiert wird.

5. Verfahren nach Anspruch 3 oder 4, **dadurch gekennzeichnet, dass** eine Verbindung unter Verwendung eines Signalisierungsprotokolls für die durchschaltevermittelte Übertragung der Nutzdaten aufgebaut wird,
dass mindestens eine in den Verbindungsaufbau einbezogene Signalisierungseinheit (48, 50) die Art der Verbindung ermittelt,
und dass eine Prüfung auf Sprechpausen nur dann durchgeführt wird, wenn eine Sprachübertragungsverbindung aufgebaut worden ist.

6. Verfahren nach Anspruch 1, 2 oder 5, **dadurch gekennzeichnet, dass** die Art der Verbindung in mindestens zwei am Verbindungsaufbau beteiligten Signalisierungseinheiten (48, 50) unabhängig voneinander ermittelt wird,
und dass bezüglich der Art der Verbindung keine Signalisierung zwischen den Signalisierungseinheiten (48, 50) ausgeführt wird.

7. Verfahren nach Anspruch 1, 2, 5 oder 6, **dadurch gekennzeichnet, dass** das Signalisierungsprotokoll das ISUP-Protokoll oder das Protokoll Q.931 oder ein auf diesen Protokollen aufbauendes Protokoll ist,
und dass in der Signalisierungseinheit (48. 50) zum Ermitteln der Art der Verbindung ein Parameter gelesen wird, in dem die Verbindungsart angegeben ist.

8. Verfahren nach einem der Ansprüche 2 bis 7, **dadurch gekennzeichnet, dass** die Bitstelle (164 bis 172) das Markerbit gemäß Übertragungsprotokoll RTP ist.

9. Verfahren nach einem der vorhergehenden Ansprüche, **dadurch gekennzeichnet, dass** die Prüfung auf Sprechpausen abhängig von einer Nachricht der Signalisierungseinheit (48,50) an mindesten eine Netzübergangseinheit (28, 42) ausgeführt wird, die zwischen Übertragungsstrecke (26, 40) und Paketübertragungsnetz (10) geschaltet ist.

10. Verfahren nach einem der vorhergehenden Ansprüche, **dadurch gekennzeichnet, dass** eine Sprechpause erfasst wird, wenn mindestens zwanzig Millisekunden lang keine für die Sprachübertragung typischen Nutzdaten übertragen werden,
und/oder dass die Datenpakete (152 bis 162) gemäß Internetprotokoll übertragen werden,
und/oder dass die übertragungsstrecke (26, 40) durch einen Zeitkanal (150) gebildet wird.

11. Verfahren nach einem der vorhergehenden Ansprach, **dadurch gekennzeichnet, dass** die Nutzdaten gemäß Standard G.711 kodiert sind.

12. Komanunikationsanordnung, gebildet durch
- eine Signalisierungseinheit, insbesondere Vermittlungsstelle (48, 50),
mit einer Anschlusseinheit mit Mitteln zum Signalisieren gemäß einem Protokoll für durchschaltevermittelte Datenübertragungsnetze (12)
und durch eine Netzübergangseinheit (28, 42) mit Mitteln an die Nutzdaten über eine übertragungsstrecke (26, 40) eines durchschaltevermittelnden Netzes (12) übertragen werden, und mit mitteln über die über die Übertragungsstrecke. (26, 42) übertragene Nutzdaten auf Datenpakete (152 bis 160) verteilt und über ein Paketübertragungsnetz (10) weitergeleitet werden, wenn die Nutzdaten für die Sprachübertragung typisch sind, und keine Nutzdaten über das Paketübertragungsnetz (10) weitergeleitet werden, wenn die Nutzdaten für Sprachdaten typisch sind,
**dadurch gekennzeichnet,**
**dass** in der Signalisierungseinheit eine Steuereinheit vorgesehen ist, mit Mitteln zum Analysieren der in den Signalisierungsinformationen enthaltenen Verbindungsarteninformationen und Mitteln zum übermitteln der Art der Verbindung und mit Mitteln zum Informieren der Netzübergangseinheit (28, 42).
wobei eine Prüfung auf Sprechpausen nur dann durchgeführt wird, wenn eine Sprachübertragungsverbindung aufgebaut worden ist.

13. Signalisierungseinheit nach Anspruch 12, **dadurch gekennzeichnet, dass** die Signalisierungseinheit oder die Netzübergangseinheit abhängig von der Art der Nutzdaten Maßnahmen veranlasst, durch die in Sprechpausen keine Datenpakete übertragen werden.

14. Signalisierungseinheit nach Anspruch 12 oder 13, **dadurch gekennzeichnet, dass** die Signalisierungseinheit so aufgebaut ist, dass bei ihrem Betrieb ein Verfahren nach einem der Ansprüche 1 bis 9 ausführbar ist.

## Claims

1. Method for transmitting voice data over various type of networks (10, 12),
in which a connection is set up by using a signalling protocol for the circuit-switched transmission of payload data,
payload data are transmitted via a transmission link (26, 40) of a circuit-switched network (12),
payload data transmitted via the transmission link (26, 42) are distributed to data packets (152 to 160) and forwarded via a packet transmission network (10) if the payload data are typical of voice transmission,
no payload data, distributed in data packets, are forwarded via the packet transmission network (10) if the payload data are typical of silence intervals, **characterized in that**
at least one signalling unit (48, 50) included in the connection setup analyses the type of connection information contained in the signalling information and the type of connection is determined,
and **in that** a check for silence intervals is only performed if a voice transmission link has been set up.

2. Method according to Claim 1, **characterized in that** in the data packets (152 to 160), the value of at least one bit position indicates that further data packets (152 to 160) are following, and that, if a silence interval is detected, at least one data packet (156) is transmitted which contains a different value at the bit position.

3. Method according to Claim 1, **characterized in that**, in the data packets (152 to 160), the value of at least one bit position (169 to 172) indicates that further data packets (152 to 160) are following,
and that a different value of the bit position (170) indicates that this is a silence interval in which no payload data are transmitted.

4. Method according to Claim 3, **characterized in that**, when a silence interval is present, payload data which are typical of silence intervals are transmitted via the transmission link (26, 42),
or the presence of a silence interval is signalled to the circuit-switched data transmission network (12) in a different way.

5. Method according to Claim 3 or 4, **characterized in that** a connection is set up by using a signalling protocol for the circuit-switched transmission of the payload data,
at least one signalling unit (48, 50) included in the connection setup determines the type of connection,
and a check for silence intervals is only performed when a voice transmission link has been set up.

6. Method according to Claim 1, 2 or 5, **characterized in that** the type of connection is determined in at least two signalling units (48, 50) involved in the connection setup independently of one another,
and no signalling with respect to the type of connection is carried out between the signalling units (48, 50).

7. Method according to Claim 1, 2, 5 or 6, **characterized**
**in that** the signalling protocol is the ISUP protocol or the Q.931 protocol or a protocol based on these protocols,
and a parameter in which the type of connection is specified is read in the signalling unit (48, 50) for determining the type of connection.

8. Method according to one of Claims 2 to 7, **characterized**
**in that** the bit position (164 to 172) is the marker bit according to the RTP transmission protocol.

9. Method according to one of the preceding claims, **characterized in that** the check for silence intervals is carried out as a function of a message of the signalling unit (48, 50) to at least one interworking unit (28, 42) which is connected between the transmission link (26, 40) and the packet transmission network (10).

10. Method according to one of the preceding claims, **characterized in that** a silence interval is detected when no payload data typical of voice transmission are transmitted for at least 20 milliseconds,
and/or the data packets (152 to 162) are transmitted according to the Internet protocol,
and/or the transmission link (26, 40) is formed by a time slot (150).

11. Method according to one of the preceding claims, **characterized in that** the payload data are coded in accordance with the G.711 standard.

12. Communication arrangement, formed by
- a signalling unit, in particular an exchange (48, 50), having an access unit with means for signalling in accordance with a protocol for circuit-switched data transmission networks (12),
and by an interworking unit (28, 42) having means to which payload data is transmitted by a transmission link (26, 40) in a circuit-switched data transmission network (12), and having means via which payload data which is transmitted via the transmission link (26, 42) is distributed between data packets (152 to 160) and is passed on via a packet transmission network (10) when the payload data is typical for voice transmission, and no payload data is passed on via the packet transmission network (10) when the payload data is typical for voice data,
**characterized**
**in that** a control unit is provided in the signalling unit, having means for analysis of the type of connection information contained in the signalling information and means for transmission of the type of connection, and having means for providing information to the interworking unit (28, 42), with a check for voice pauses being carried out only when a voice transmission connection has been set up.

13. Signalling unit according to Claim 12, **characterized in that** the signalling unit or the interworking unit initiates, as a function of the type of payload data, measures by means of which no data packets are transmitted in silence intervals.

14. Signalling unit according to Claim 12 or 13, **characterized in that** the signalling unit is configured in such a manner that, when it is operated, a method according to one of Claims 1 to 9 can be carried out.

## Revendications

1. Procédé de transmission de données vocales sur différents types de réseaux (10, 12),
dans lequel une connexion est établie en utilisant un protocole de signalisation pour la transmission commutée par circuits de données utiles,
des données utiles sont transmises sur un trajet de transmission (26, 40) d'un réseau à commutation de circuits (12),
les données utiles transmises sur le trajet de transmission (26, 42) sont réparties sur des paquets de données (152 à 160) et transmises sur un réseau de transmission de paquets (10) lorsque les données utiles sont typiques de la transmission vocale,
aucune des données utiles réparties dans des paquets de données n'est transmise sur le réseau de transmission de paquets (10) lorsque les données utiles sont typiques de pauses vocales,
**caractérisé en ce**
**qu'**au moins une unité de signalisation (48, 50) impliquée dans l'établissement d'une connexion analyse les informations sur le type de connexion contenues dans les informations de signalisation et détermine le type de connexion,
et **qu'**une vérification de l'existence de pauses vocales est exécutée uniquement lorsqu'une connexion de transmission vocale a été établie.

2. Procédé selon la revendication 1, **caractérisé en ce que**, dans les paquets de données (152 à 160), la valeur d'au moins un chiffre binaire indique que d'autres paquets de données (152 à 160) suivent,
et **en ce que**, lors de la détection d'une pause vocale, au moins un paquet de données (156) contenant une autre valeur au niveau du chiffre binaire est transmis.

3. Procédé selon la revendication 1,
**caractérisé en ce que**,
dans les paquets de données (152 à 160) la valeur d'au moins un chiffre binaire (169 à 172) indique que d'autres paquets de données (152 à 160) suivent,
et **en ce qu'**une autre valeur du chiffre binaire (170) indique l'existence d'une pause vocale dans laquelle aucune donnée utile n'est transmise.

4. Procédé selon la revendication 3, **caractérisé en ce que**, s'il existe une pause vocale, des données utiles typiques de pauses vocales sont transmises sur le trajet de transmission (26, 42),
ou **en ce que** l'existence d'une pause vocale est signalée d'une autre manière au réseau de transmission de données à commutation de circuits (12).

5. Procédé selon la revendication 3 ou 4, **caractérisé en ce qu'**une connexion est établie en utilisant un protocole de signalisation pour la transmission par commutation de circuits des données utiles,
**en ce qu'**au moins une unité de signalisation (48, 50) impliquée dans l'établissement d'une connexion détermine le type de connexion,
et **en ce qu'**une vérification de l'existence de pauses vocales est exécutée uniquement lorsqu'une connexion de transmission vocale a été établie.

6. Procédé selon la revendication 1, 2 ou 5, **caractérisé en ce que** le type de connexion est déterminé dans au moins deux unités de signalisation (48, 50) participant à l'établissement de la connexion, et ce d'une manière indépendante l'une de l'autre,
et **en ce qu'**aucune signalisation n'est exécutée entre les unités de signalisation (48, 50) concernant le type de la connexion.

7. Procédé selon la revendication 1, 2, 5 ou 6, **caractérisé en ce que** le protocole de signalisation est le protocole ISUP ou le protocole Q.931 ou un protocole se basant sur ces protocoles,
et **en ce qu'**un paramètre dans lequel est indiqué le type de connexion est lu, dans l'unité de signalisation (48, 50) pour déterminer le type de la connexion.

8. Procédé selon l'une des revendications 2 à 7, **caractérisé en ce que** le chiffre binaire (164 à 172) est le bit de marquage conformément au protocole de transmission RTP.

9. Procédé selon l'une des revendications précédentes, **caractérisé en ce que** la vérification de l'existence de pauses vocales est exécutée en fonction d'un message de l'unité de signalisation (48, 50) à au moins une unité d'interconnexion de réseaux (28, 42) intercalée entre le trajet de transmission (26, 40) et le réseau de transmission de paquets (10).

10. Procédé selon l'une des revendications précédentes, **caractérisé en ce qu'**une pause vocale est détectée lorsqu'aucune donnée utile typique de la transmission vocale n'est transmise pendant au moins vingt millisecondes,
et/ou **en ce que** les paquets de données (152 à 162) sont transmis conformément au protocole Internet,
et/ou **en ce que** le trajet de transmission (26, 40) est formé par un canal temporel (150).

11. Procédé selon l'une des revendications précédentes,
**caractérisé en ce que** les données utiles sont codées selon la norme G.711.

12. Dispositif de communication formé par
- une unité de signalisation, notamment un centre de commutation (48, 50), comprenant une unité de raccordement pourvue de moyens pour la signalisation conformément à un protocole pour des réseaux de transmission de données à commutation de circuits (12),
- et par une unité d'interconnexion de réseaux (28, 42) comprenant des moyens auxquels des données utiles sont transmises sur un trajet de transmission (26, 40) d'un réseau à commutation de circuits (12) et comprenant des moyens grâce auxquels des données utiles transmises sur le trajet de transmission (26, 42) sont réparties sur des paquets de données (152 à 160) et transmises sur un réseau de transmission de paquets (10) lorsque les données utiles sont typiques de la transmission vocale, et aucune donnée utile n'est transmise sur le réseau de transmission de paquets (10) lorsque les données utiles sont typiques de pauses vocales,
**caractérisé en ce que** l'on prévoit, dans l'unité de signalisation, une unité de commande comprenant des moyens pour analyser les informations sur le type de connexion contenues dans les informations de signalisation et des moyens pour transmettre le type de la connexion ainsi que des moyens pour informer l'unité d'interconnexion de réseaux (28, 42),
une vérification de l'existence de pauses vocales n'étant exécutée que lorsqu'une connexion de transmission vocale a été établie.

13. Unité de signalisation selon la revendication 12, **caractérisée en ce que** l'unité de signalisation ou l'unité d'interconnexion de réseaux initie, en fonction du type des données utiles, des mesures grâce auxquelles aucun paquet de données n'est transmis pendant des pauses vocales.

14. Unité de signalisation selon la revendication 12 ou 13, **caractérisée en ce que** l'unité de signalisation est constituée de manière à ce qu'un procédé selon l'une des revendications 1 à 9 puisse être exécuté lors du fonctionnement de l'unité.
